# EUROPEAN PATENT APPLICATION

(11) **EP 4 009 504 A1**
(43) Date of publication of application: **08.06.2022**
(21) Application number: 21208766.2
(22) Date of filing: 17.11.2021
(51) Int. Cl.: H02M 1/00, H02M 3/158, H02M 3/335

(54) **VOLTAGE CONVERSION DEVICE**

(30) Priority: 02.12.2020 JP 2020200024
(71) Applicant: Yazaki Corporation, Minato-ku Tokyo 108-8333 (JP)
(72) Inventor: Kanda, Keisuke, Susono-shi, Shizuoka, 410-1194 (JP); Ito, Satoshi, Susono-shi, Shizuoka, 410-1194 (JP); Yoshimitsu, Shota, Susono-shi, Shizuoka, 410-1194 (JP)
(74) Representative: Hoffmann Eitle

(57) **Abstract**

A voltage conversion device includes first to fourth input-side switching elements provided on an input side of a smoothing inductance, first and second power supply lines provided on an output side of the smoothing inductance and configured to respectively supply power to a first load and a second load operating at an operating voltage lower than that of the first load; first and second output-side switching elements respectively provided on the first and second power supply lines, and a control unit configured to perform on/off control on the first and second output-side switching elements. The control unit turns on the first output-side switching element to supply power to the first load, without supplying power to the second load by turning off the second output-side switching element, during a period in which the current is supplied to the smoothing inductance by switching of the input-side switching elements.

## Description

### TECHNICAL FIELD

The present invention relates to a voltage conversion device.

### BACKGROUND ART

In related-art, a voltage conversion device having a full bridge circuit that supplies power to a load after voltage conversion has been proposed (for example, see Patent Literature 1). As such a voltage conversion device, a single-inductor multiple-output (SIMO) type or a single-inductor dual-output (SIDO) type voltage conversion device has been proposed in order to obtain a plurality of outputs.

### Citation List

### Patent Literature

Patent Literature 1: JP- 2020-080625-A

### SUMMARY OF INVENTION

In a voltage conversion device disclosed in Patent Literature 1, four switching elements constitute a full bridge circuit. On/off frequencies of the four switching elements are made to coincide with each other. For example, the voltage conversion device turns off the second and third switching elements when the first and fourth switching elements of the four switching elements are turned on, and turns off the first and fourth switching elements when the second and third switching elements are turned on.

However, in such a voltage conversion device, a ripple current may increase depending on an operating condition. In such a case, a current condition required for an inductor becomes strict, and problems such as an increase in a size of the inductor and heat generation occur.

The present invention has been made to solve such problems in related-art, and an object thereof is to provide a voltage conversion device capable of reducing a ripple current.

A voltage conversion device according to the present invention is a voltage conversion device configured to convert an input voltage supplied from a power supply side into a desired output voltage. The voltage conversion device includes: a smoothing inductance configured to store energy therein; an input-side switching unit provided on an input side of the smoothing inductance and configured to perform switching and supply a current to the smoothing inductance according to the switching; first and second power supply lines provided on an output side of the smoothing inductance and configured to respectively supply power to a first load and a second load operating at an operating voltage lower than that of the first load; first and second output-side switching units respectively provided on the first and second power supply lines; and a control unit configured to perform on/off control on the first and second output-side switching units. The control unit turns on the first output-side switching unit to supply power to the first load, without supplying power to the second load by turning off the second output-side switching unit, during a period in which the current is supplied to the smoothing inductance by switching of the input-side switching unit.

### BRIEF DESCRIPTION OF DRAWINGS

Fig. 1 is a configuration diagram of a voltage conversion device according to an embodiment of the present invention.
Fig. 2 is a timing chart showing a state of control of a voltage conversion device according to a comparative example.
Fig. 3 is a timing chart showing a state of control of a voltage conversion device 1 according to the embodiment.
Figs. 4A and 4B are diagrams for explaining a magnitude of a ripple current, in which Fig. 4A shows an inductance current according to the comparative example, and Fig. 4B shows an inductance current according to the embodiment.

### DESCRIPTION OF EMBODIMENTS

Hereinafter, the present invention will be described in accordance with a preferred embodiment. The present invention is not limited to the embodiment to be described below, and can be changed as appropriate without departing from the scope of the present invention. In the embodiment described below, some configurations are not shown or described, but it goes without saying that a known or well-known technique is applied as appropriate to details of an omitted technique within a range in which no contradiction occurs to contents described below.

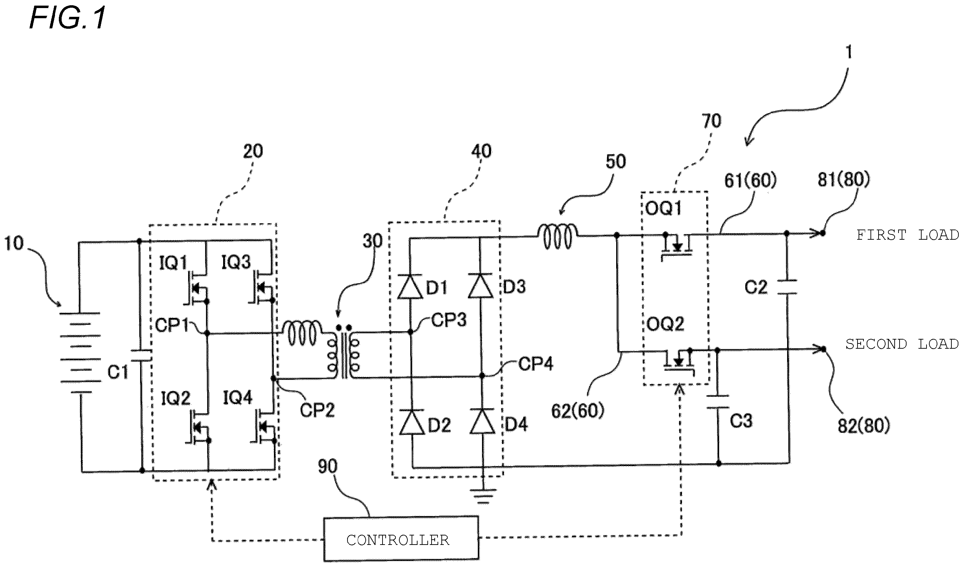

Fig. 1 is a configuration diagram of a voltage conversion device according to an embodiment of the present invention. A voltage conversion device 1 shown in Fig. 1 uses a voltage from a high-voltage power supply 10 as an input voltage and outputs a plurality of different desired output voltages, and includes the power supply 10, a full bridge circuit 20, a transformer 30, a rectifier circuit 40, a smoothing inductance 50, a power supply line 60, a switching unit 70, an output unit 80 and a control unit (control means) 90.

The power supply 10 supplies DC power. The power supply 10 is configured by, for example, connecting a plurality of battery cells in series. In the present embodiment, the power supply 10 supplies a relatively high voltage that requires insulation.

The full bridge circuit 20 is provided on an input side of the smoothing inductance 50 (power supply 10 side), and converts the DC power into AC power. The full bridge circuit 20 is a phase shift type switching circuit, and includes four input-side switching elements (input-side switching means) IQ1 to IQ4. The four input-side switching elements IQ1 to IQ4 are constituted by, for example, N-channel metal-oxide-semiconductor field-effect transistors (MOSFETs), and are switched to obtain the desired output voltage.

The first input-side switching element IQ1 has a drain connected to a positive electrode of the power supply 10 and a source connected to a first connection point CP1. The second input-side switching element IQ2 has a drain connected to the first connection point CP1 and a source connected to a negative electrode of the power supply 10. The third input-side switching element IQ3 has a drain connected to the positive electrode of the power supply 10 and a source connected to a second connection point CP2. The fourth input-side switching element IQ4 has a drain connected to the second connection point CP2 and a source connected to the negative electrode of the power supply 10.

Gates of the four input-side switching elements IQ1 to IQ4 are connected to the control unit 90. The control unit 90 performs switching control on the four input-side switching elements IQ1 to IQ4. By the switching control, the DC power of the power supply 10 is converted into the AC power, and the AC power is output to a primary winding of the transformer 30. An input capacitor C1 for smoothing is provided between the full bridge circuit 20 and the power supply 10.

The transformer 30 converts an input voltage. The transformer 30 includes the primary winding and a secondary winding. The primary winding and the secondary winding are magnetically coupled to each other in a state of being insulated from each other. The primary winding is connected to the full bridge circuit 20. One end of the primary winding is connected to the first connection point CP1 via an inductance, and the other end thereof is connected to the second connection point CP2. The secondary winding is connected to the rectifier circuit 40. For example, one end of the secondary winding is connected to a third connection point CP3, and the other end thereof is connected to a fourth connection point CP4.

A degree of voltage conversion of the transformer 30 is determined according to a turn ratio (voltage conversion ratio) of the primary winding to the secondary winding. In the present embodiment, the transformer 30 steps down the AC power supplied from the full bridge circuit 20 and outputs the stepped-down AC power to the rectifier circuit 40.

The rectifier circuit 40 rectifies the AC power into DC power. The rectifier circuit 40 includes four diodes D1 to D4. The rectifier circuit 40 constitutes a bridge circuit with the first to fourth diodes D1 to D4 and performs full-wave rectification.

The first diode D1 has an anode connected to the third connection point CP3 and a cathode connected to the smoothing inductance 50. The second diode D2 has an anode connected to a ground and a cathode connected to the third connection point CP3. The third diode D3 has an anode connected to the fourth connection point CP4 and a cathode connected to the smoothing inductance 50. The fourth diode D4 has an anode connected to the ground and a cathode connected to the fourth connection point CP4.

The rectifier circuit 40 rectifies the AC power stepped down by the transformer 30 into the DC power, and outputs the DC power to the output unit 80 via the smoothing inductance 50 and the switching unit 70.

The smoothing inductance 50 smooths a direct current (pulsating current). The smoothing inductance 50 is provided between the rectifier circuit 40 and the switching unit 70. One end of the smoothing inductance 50 is connected to the cathodes of the first diode D1 and the third diode D3, and the other end thereof is connected to the power supply line 60.

The smoothing inductance 50 stores energy when a current is supplied according to switching of the first to fourth input-side switching elements IQ1 to IQ4, and discharges the stored energy to supply power to the power supply line 60 when a supply of the current is stopped.

The power supply line 60 is a conductive line connected to the output unit 80, and includes a first power supply line 61 connected to a first output unit 81 and a second power supply line 62 connected to a second output unit 82. A load (first load) having an operating voltage higher than that of the second power supply line 62 is connected to the first power supply line 61, and a load (second load) having an operating voltage lower than that of the first power supply line 61 is connected to the second power supply line 62.

The switching unit 70 adjusts currents flowing through the two output units 81, 82. The switching unit 70 constitutes a single inductor multi-output (SIMO) type circuit together with the smoothing inductance 50. The switching unit 70 includes a first output-side switching element OQ1 provided on the first power supply line 61 and a second output-side switching element OQ2 provided on the second power supply line 62. As with the first to fourth input-side switching elements IQ1 to IQ4, the first and second output-side switching elements OQ1, OQ2 are constituted by, for example, N-channel MOSFETs.

The output unit 80 includes the first output unit 81 and the second output unit 82. A voltage higher than that of the second output unit 82 is output from the first output unit 81. A second smoothing capacitor C2 is provided on a first output-side switching element OQ1 side of the first output unit 81, and a third smoothing capacitor C3 is provided on a second output-side switching element OQ2 side of the second output unit 82.

The control unit 90 performs PWM control, that is, on/off control on the first to fourth input-side switching elements IQ1 to IQ4 and the first and second output-side switching elements OQ1, OQ2. The control unit 90 performs the on/off control on the switching elements IQ1 to IQ4, OQ1, OQ2 based on, for example, a voltage command value transmitted from a host device. By these switching operations, desired voltages are output from the first output unit 81 and the second output unit 82.

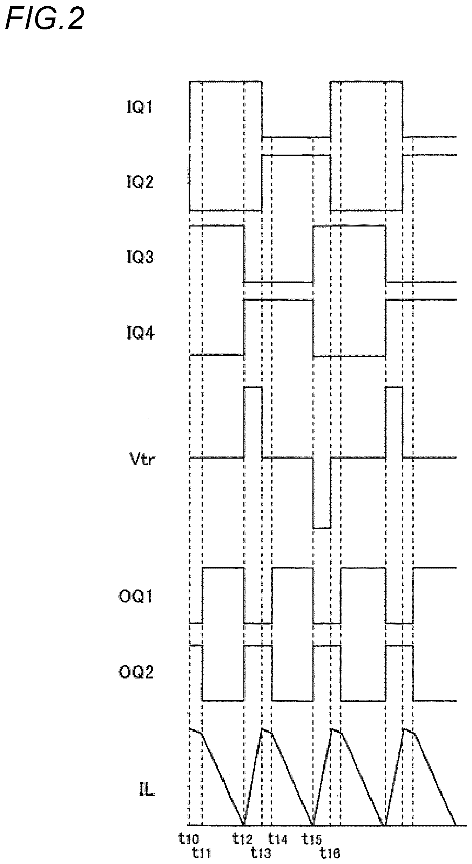

Here, in such a voltage conversion device 1, a ripple current may become large depending on a switching timing. Fig. 2 is a timing chart showing a state of control of a voltage conversion device according to a comparative example.

As shown in Fig. 2, in the voltage conversion device according to the comparative example, for example, at a time point t10, the first and third input-side switching elements IQ1, IQ3 are turned on, and the second output-side switching element OQ2 is turned on. At this time, for example, a current of the smoothing inductance 50 has a maximum value. The second and fourth input-side switching elements IQ2 and IQ4 are turned off, and the first output-side switching element OQ1 is also turned off.

Next, at a time point t11, the first output-side switching element OQ1 is turned on, and the second output-side switching element OQ2 is turned off. Thereby, power is supplied to the first output unit 81 using energy stored in the smoothing inductance 50.

Next, at a time point t12 at which the energy stored in the smoothing inductance 50 is exhausted, the third input-side switching element IQ3 is turned off, and the fourth input-side switching element IQ4 is turned on. Thereby, a positive voltage Vtr is applied to the primary winding of the transformer 30, and energy is stored in the smoothing inductance 50 through the secondary winding. In addition, at the time point t12, the first output-side switching element OQ1 is turned off, and the second output-side switching element OQ2 is turned on. Therefore, power is supplied to the second output unit 82.

Thereafter, at a time point t13, the first input-side switching element IQ1 is turned off, and the second output-side switching element OQ2 is turned on. Thereby, power is supplied to the second output unit 82 using energy stored in the smoothing inductance 50.

Next, at a time point t14, the first output-side switching element OQ1 is turned on, and the second output-side switching element OQ2 is turned off. Thereby, power is supplied to the first output unit 81 using energy stored in the smoothing inductance 50.

Next, at a time point t15 at which the energy stored in the smoothing inductance 50 is exhausted, the third input-side switching element IQ3 is turned on, and the fourth input-side switching element IQ4 is turned off. Thereby, a negative voltage Vtr is applied to the primary winding of the transformer 30, and energy is stored in the smoothing inductance 50 through the secondary winding. In addition, at the time point t15, the first output-side switching element OQ1 is turned off, and the second output-side switching element OQ2 is turned on. Therefore, power is supplied to the second output unit 82.

Thereafter, in transition to a time point t16, operations from the time point t10 to the time point t15 are repeatedly executed. Here, in the voltage conversion device according to the comparative example, the second output-side switching element OQ2 is on in periods (from the time point t12 to the time point t13, from the time point t15 to the time point t16) during which the positive or negative voltage Vtr is applied to the primary winding of the transformer 30 and a current is supplied to the smoothing inductance 50 through the secondary winding. Therefore, a ripple current tends to increase. Hereinafter, this point will be described in detail.

First, a period during which a current of the smoothing inductance 50 rises as from the time point t12 to the time point t13, from the time point t15 to the time point t16 is referred to as a first period, a period during which energy of the smoothing inductance 50 is supplied to the second output unit 82 as from the time point t10 to the time point t11, from the time point t13 to the time point t14 is referred to as a second period, and a period during which energy of the smoothing inductance 50 is supplied to the first output unit 81 as from the time point t11 to the time point t12, from the time point t14 to the time point t15 is referred to as a third period.

Here, a fluctuation amount di of a current flowing through the smoothing inductance 50 can be expressed by di = (V_{Li} - V_{Lo})/L × dt. V_{Li} is an input-side voltage of the smoothing inductance 50, V_{Lo} is an output-side voltage of the smoothing inductance 50, L is an inductance value of the smoothing inductance 50, and dt is a duration of each period.

From such an arithmetic expression, the fluctuation amount di of a current flowing through the smoothing inductance 50 in the first period is di = (Vi - Vₒ₂)/L × Dtr × Tₛ. Vᵢ is an input-side voltage of the smoothing inductance 50. Vₒ₂, which is an output-side voltage of the second output unit 82, is input to the output-side voltage V_{Lo} of the smoothing inductance 50.

D₂ to be described later is a duty ratio of the second output-side switching element OQ2, Dₜᵣ is a ratio (maximum is "1") of a time period during which a voltage is applied to the transformer 30 (a time period during which Vₜᵣ indicates a positive or negative value) to an entire cycle (switching cycle), and Tₛ is a switching cycle.

In the second period, an input-side voltage of the smoothing inductance 50 is zero, and a voltage is output to the second output unit 82. Therefore, the fluctuation amount di of a current flowing through the smoothing inductance 50 in the second period is di = -Vₒ₂/L × (D₂ - Dₜᵣ) × Tₛ.

In the third period, an input-side voltage of the smoothing inductance 50 is zero, and a voltage is output to the first output unit 81. Therefore, the fluctuation amount di of a current flowing through the smoothing inductance 50 in the third period is di = -Vₒ₁/L × (1-D₂) × Tₛ.

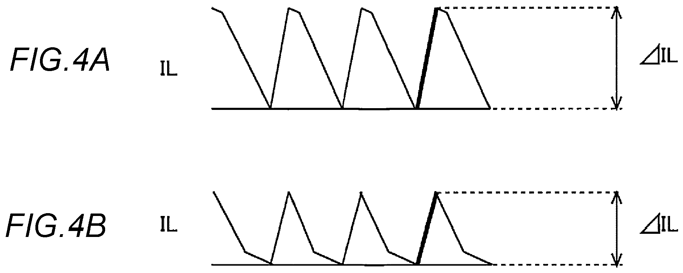

Figs. 4A and 4B are diagrams for explaining a magnitude of a ripple current, and Fig. 4A shows an inductance current according to the comparative example. In the comparative example, as shown in Fig. 2, when an input-side voltage of the smoothing inductance 50 is a positive or negative value, a voltage is output to the second output unit 82 having a smaller output voltage, among the first output unit 81 and the second output unit 82 (the second output-side switching element OQ2 is turned on). Therefore, a component of V_{LO} in the first period becomes Vₒ₂ and becomes smaller. Therefore, as shown in Fig. 4A, a fluctuation amount ΔIL of the inductance current tends to increase, and the ripple current increases.

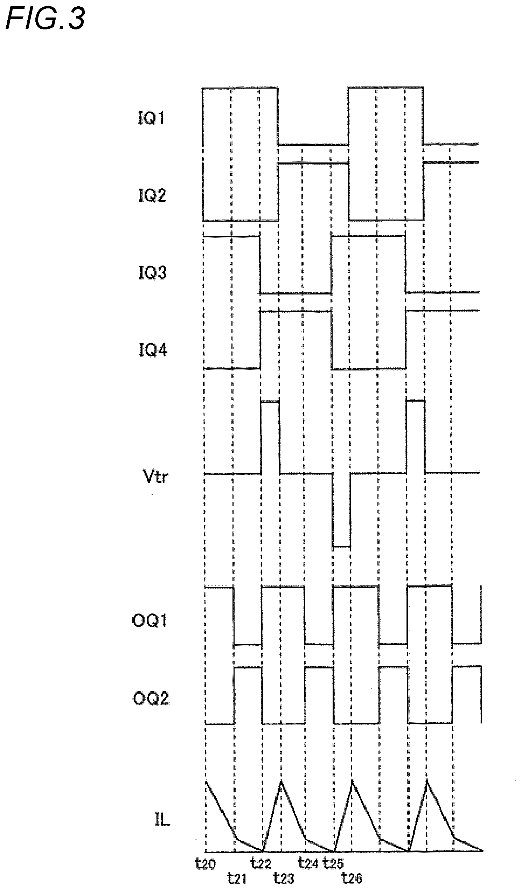

Fig. 3 is a timing chart showing a state of control of the voltage conversion device 1 according to the embodiment. As shown in Fig. 3, in the voltage conversion device 1 according to the embodiment, for example, at a time point t20, the first and third input-side switching elements IQ1, IQ3 are turned on, and the first output-side switching element OQ1 is turned on. At this time, for example, a current of the smoothing inductance 50 has a maximum value. The second and fourth input-side switching elements IQ2, IQ4 are turned off, and the second output-side switching element OQ2 is also turned off.

Next, at a time point t21, the first output-side switching element OQ1 is turned off, and the second output-side switching element OQ2 is turned on. Thereby, power is supplied to the second output unit 82 using energy stored in the smoothing inductance 50.

Next, at a time point t22 at which the energy stored in the smoothing inductance 50 is exhausted, the third input-side switching element IQ3 is turned off, and the fourth input-side switching element IQ4 is turned on. Thereby, a positive voltage Vtr is applied to the primary winding of the transformer 30, and energy is stored in the smoothing inductance 50 through the secondary winding. In addition, at the time point t22, the first output-side switching element OQ1 is turned on, and the second output-side switching element OQ2 is turned off. Therefore, power is supplied to the first output unit 81.

Thereafter, at a time point t23, the first input-side switching element IQ1 is turned off, and the second input-side switching element IQ2 is turned on. Thereby, power is supplied to the first output unit 81 using energy stored in the smoothing inductance 50.

Next, at a time point t24, the first output-side switching element OQ1 is turned off, and the second output-side switching element OQ2 is turned on. Thereby, power is supplied to the second output unit 82 using energy stored in the smoothing inductance 50.

Next, at a time point t25 at which the energy stored in the smoothing inductance 50 is exhausted, the third input-side switching element IQ3 is turned on, and the fourth input-side switching element IQ4 is turned off. Thereby, a negative voltage Vtr is applied to the primary winding of the transformer 30, and energy is stored in the smoothing inductance 50 through the secondary winding. In addition, at the time point t25, the first output-side switching element OQ1 is turned on, and the second output-side switching element OQ2 is turned off. Therefore, power is supplied to the first output unit 81.

Thereafter, in transition to a time point t26, operations at from the time point t20 to the time point t25 are repeatedly executed. Here, in the voltage conversion device 1 according to the present embodiment, the first output-side switching element OQ1 is turned on in a period (from the time point t22 to the time point t23, from the time point t25 to the time point t26) during which the positive or negative voltage Vtr is applied to the primary winding of the transformer 30 and a current is supplied to the smoothing inductance 50 through the secondary winding. Therefore, a ripple current can be prevented. Hereinafter, this point will be described in detail.

First, a period during which a voltage is applied to the smoothing inductance 50 and a current rises as from the time point t22 to the time point t23, from the time point t25 to the time point t26 is referred to as a first period, a period during which energy of the smoothing inductance 50 is supplied to the first output unit 81 as from the time point t20 to the time point t21, from the time point t23 to the time point t24 is referred to as a second period, and a period during which energy of the smoothing inductance 50 is supplied to the second output unit 82 as from the time point t21 to the time point t22, from the time point t24 to the time point t25 is referred to as a third period.

In the present embodiment, a fluctuation amount di of a current flowing through the smoothing inductance 50 in the first period can be expressed as di = (Vi - Vₒ₁)/L × Dtr × Tₛ based on an equation of di = (V_{Li} - V_{Lo})/L × dt. Here, an output voltage Vₒ₁ of the first output unit 81 is input to an output-side voltage V_{Lo} of the smoothing inductance 50.

In the second period, an input-side voltage of the smoothing inductance 50 is zero, and a voltage is output to the first output unit 81. Therefore, the fluctuation amount di of a current flowing through the smoothing inductance 50 in the second period is di = -Vₒ₁/L × (D₁ - Dtr) × Tₛ. D₁ is a duty ratio of the first output-side switching element OQ1.

In the third period, an input-side voltage of the smoothing inductance 50 is zero, and a voltage is output to the second output unit 82. Therefore, the fluctuation amount di of a current flowing through the smoothing inductance 50 in the third period is di = -Vₒ₂/L × (1 - D₁) × Tₛ.

Fig. 4B shows an inductance current according to the embodiment. In the present embodiment, as shown in Fig. 3, when an input-side voltage of the smoothing inductance 50 is a positive or negative value, a voltage is output to the first output unit 81 having a higher output voltage, among the first output unit 81 and the second output unit 82 (the first output-side switching element OQ1 is turned on). Therefore, a component of V_{LO} in the first period becomes Vₒ₁ and becomes larger. Therefore, as shown in Fig. 4B, a fluctuation amount ΔIL of the inductance current tends to be small, and the ripple current can be reduced.

In this way, according to the voltage conversion device 1 of the present embodiment, since the first output-side switching element OQ1 is turned on in a period during which a current is supplied to the smoothing inductance 50, power is supplied to one of the first load and the second load having a higher operating voltage. Therefore, the fluctuation amount ΔIL of the inductance current can be reduced, and the ripple current can be reduced. Therefore, the voltage conversion device 1 capable of reducing the ripple current can be provided.

Although the present invention has been described above based on the embodiment, the present invention is not limited to the above embodiment, and modifications may be made or well-known techniques may be combined without departing from the scope of the present invention.

For example, in the present embodiment, the insulating type voltage conversion device 1 has been described as an example, but the present invention is not particularly limited thereto, and a non-insulating type voltage conversion device may be used. In addition, the voltage conversion device 1 is not limited to a voltage step-down device but may be a voltage step-up device. Further, the present invention is not limited to the synchronous rectification type voltage conversion device 1 including the full bridge circuit 20, and the full bridge circuit 20 may not be included, and diode rectification may be possible.

According to the present invention, a voltage conversion device capable of reducing a ripple current can be provided.

## Claims

1. A voltage conversion device (1) configured to convert an input voltage supplied from a power supply into a desired output voltage, the voltage conversion device comprising:
a smoothing inductance (50) configured to store energy therein;
an input-side switching unit (IQ1-IQ4) provided on an input side of the smoothing inductance (50) and configured to perform switching and supply a current to the smoothing inductance (50) according to the switching;
a first power supply line (61) provided on an output side of the smoothing inductance (50) and configured to supply power to a first load;
a second power supply line (62) provided on the output side of the smoothing inductance (50) and configured to supply power to a second load operating at an operating voltage lower than that of the first load;
a first output-side switching unit (OQ1) provided on the first power supply line;
a second output-side switching unit (OQ2) provided on the second power supply line; and
a control unit (90) configured to perform on/off control on the first and second output-side switching units (OQ1, OQ2),
wherein the control unit (90) turns on the first output-side switching unit (OQ1) to supply power to the first load, without supplying power to the second load by turning off the second output-side switching unit (OQ2), during a period in which the current is supplied to the smoothing inductance (50) by switching of the input-side switching unit.
